# EUROPEAN PATENT SPECIFICATION

(11) **EP 2 006 225 B1**
(45) Date of publication and mention of the grant of the patent: **19.12.2012**
(21) Application number: 08156470.0
(22) Date of filing: 19.05.2008
(51) Int. Cl.: B65G 1/133

(54) **Multilevel rotating storage equipment**
Mehrstufige Rotationsspeichervorrichtung
Équipement de stockage rotatif multi-niveaux

(30) Priority: 18.06.2007 IT MI20071218
(43) Date of publication of application: 24.12.2008
(73) Proprietor: VH S.R.L., 44034 Copparo (FE) (IT)
(72) Inventor: Merli, Vittorio, 44100 Ferrara (IT); Savorelli, Adriano, 44100 Ferrara (IT)
(74) Representative: Ottazzo, Marco Francesco Agostino

(56) References cited:
- US-A- 1 100 374
- US-A- 2 423 557
- US-A- 3 682 331
- US-A- 3 982 890

## Description

The present invention regards a multilevel rotating storage equipment.

In the storage technique for products and/or raw materials and/or semi-finished products, known are automatic or manual storage equipments of various types and sizes which can be substantially classified into three main categories:
a) Storage equipments in which the stored material such as (goods/semi-finished products/ components and the like, "products" in general) remain fixed at the position they are placed and/or drawn by any kind of moveable means which see to the movement of the product and/or of the products. For example, included in this category are storage equipments with vertical shelves arranged at several levels and with various columns which are fed by means of drawing devices at cartesian coordinates (x, y, z) which allow to position and/or find the single element in the space.
   This kind of storage equipment may be of considerable dimensions and concern extremely heavy and/or bulky goods but also light and heavy ones;
b) Storage equipment in which the products are constantly moved or moveable automatically to deliver them to the fixed drawing and/or depositing stations. Usually such cases concern conveyor storage equipment with movement at horizontal or vertical or combined positions which, rarely reach considerable dimensions and they are intended for small, light and expensive products (for example medicines, books, electrical, electronic and other similar components) sold at the counter by the personnel;
c) "Self service" storage equipment in which the product is at a fixed station and placed and/or drawn normally by personnel and/or the customers who, by means of suitable means (manually and/or self propelled trolleys etc), transfer the product to the exit point. Such for example is the organisation used in the large-scale retail trade (supermarkets, shopping centres and the like).

Another category of storage equipments includes the storage equipments of rotary type. For example, Document US 3 982 890 A discloses a rotating storage equipment according to the preamble of claim 1, wherein the storage equipment is circular and is formed by a plurality of interconnected spaced rack sections. Other storage equipments of known type are disclosed, for example, in documents US 3 682 890 A, US 1 100 374 A and US 2 423 557 A.

Generally, the storage and/or deposit systems for products found in sectors ranging from the most sophisticated or bulky industrial sector to the retail traders belong to one of the abovementioned categories or their combination which has advantageous aspects for the treated product and for the specific use of the same.

Therefore, the Applicant thought of a solution to the problem of optimising the storage of the products concerning both the space occupied and the storage/drawing operations required.

The Applicant provided a solution to the abovementioned problem by means of the multilevel rotating storage equipment according to the description outlined in claim 1.

Further characteristics of the invention are subject of the dependent claims.

Advantageously, the multilevel rotating storage equipment according to the present invention can also be used as an industrial equipment in which a product can be placed in order to allow and/or subject the product itself to any technological treatment or process over the period of time the product remains within the automatic storage equipment itself.

The multilevel rotating storage equipment, according to the present invention, comprises circular ring enclosure provided with a plurality of levels each comprising support means for the elements to be stored, a loading station and an unloading station of the abovementioned elements at fixed and predetermined locations, and means rotating the enclosure to position it in proximity to the abovementioned stations.

The characteristics and advantages of a multilevel rotating storage equipment according to the present invention shall be clearer from the following exemplifying and non-limiting description with reference to the schematic attached drawings wherein:
Figure 1 is a schematic top plan view of the rotating storage equipment according to the invention;
Figure 2 is a perspective view of the rotating storage equipment according to the invention;

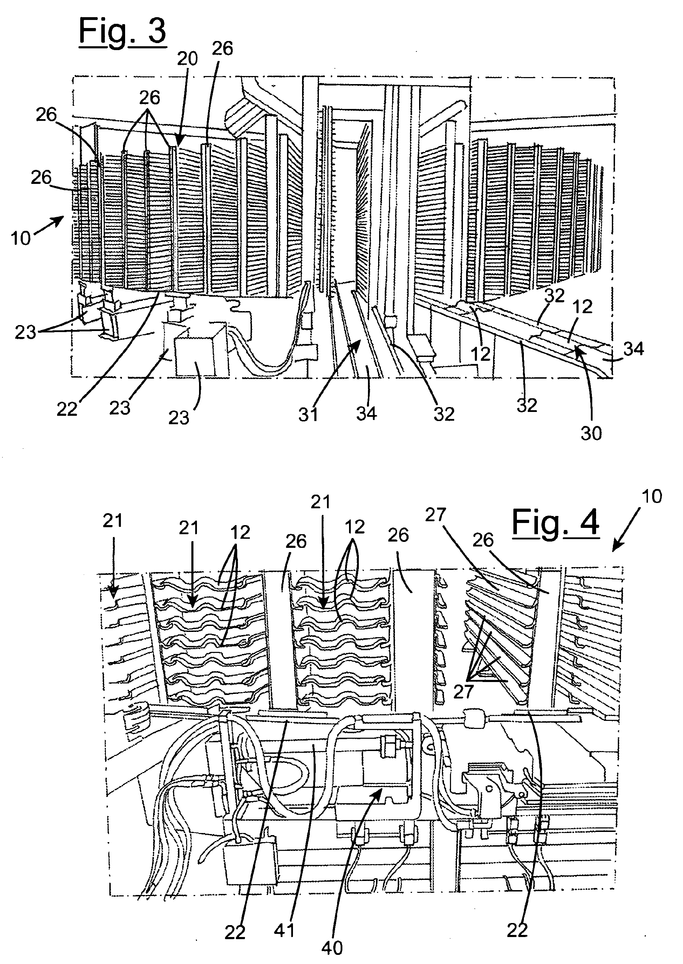

Figures 3 and 4 are perspective views of details of the rotating storage equipment according to the invention.

Referring to the figures, illustrated is a rotating storage equipment 10 with a plurality of levels.

The rotating storage equipment 10 comprises an enclosure 20 shaped to form a circular ring and provided with a plurality of levels each comprising support means 21 for elements or products 12 to be stored, a loading station 30 and an unloading station 31 of the abovementioned elements 12 at fixed and predetermined locations, and movement means 40 adapted to rotate the enclosure to position it in proximity to the abovementioned stations 30, 31.

The enclosure 20 comprises a circular ring-shaped platform 22 of suitable dimensions which can be made of sheet panels made of steel or any other material suitably shaped and connectable to each other in such a manner to obtain the desired circular ring shape of a predetermined diameter.

The platform 22 is supported by a plurality of radial beams 23 through interposition of idler wheels, of dimensions and characteristics suitable to bear the loads placed on them.

The radial beams 23 can be positioned and adjusted in such a manner that all the idler wheels are tangential with respect to the same plane and arranged in such a manner to be able to rotate tangentially to the innumerable traceable circumferences with respect to the theoretical centre of rotation of the enclosure 20.

Rising from the platform 22 are support means 21 comprising a plurality of radial racks provided adjacent to which are levels or support surfaces, according to the number and dimensions desired adapted to accommodate the elements or products 12 to be stored.

Such racks, are arranged radially in such a manner to be able to accommodate, on several levels and with preset intervals, the elements to be stored at pleasure both in terms of dimensions and number of levels.

Said racks are fixed against the circular ring-shaped platform 22 and on the upper part at the last level they provide for a series of connections 28, also circular ring-shaped, which ensure the flexural and torsional rigidity of the assembly.

The movement means 40 of the rotating enclosure are preferably made through a constant pitch indexing system operated by a variable speed hydraulic oil cylinder 41, in such a manner to provide an acceleration and/or deceleration ramp according to a preset cycle allowing to pass from a loading/unloading position to another and different position.

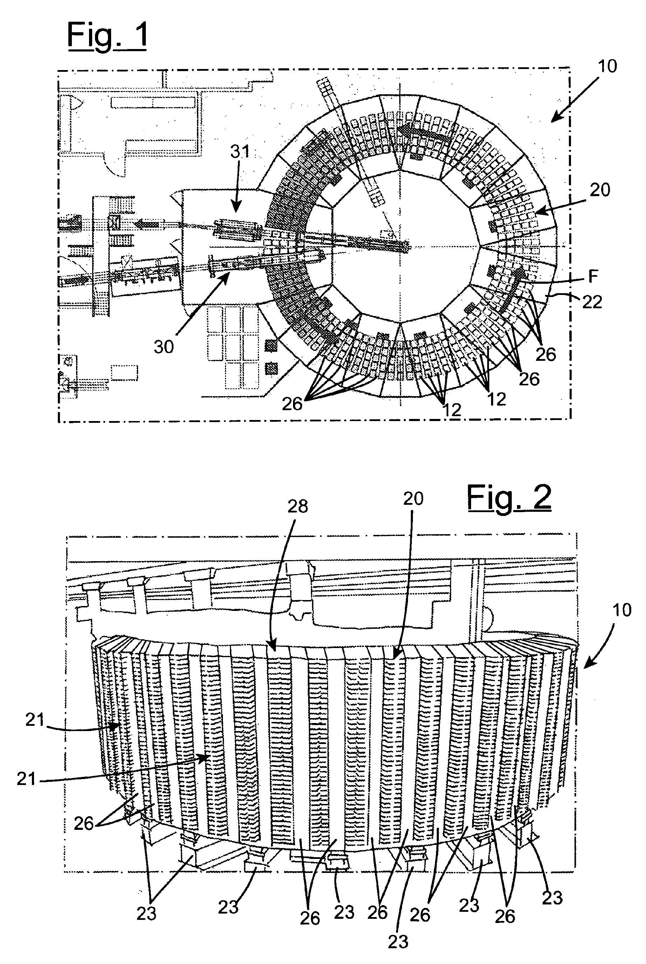

In a different embodiment the drive is continuous at a constant and/or variable speed according to predeterminable rotation programmes towards the direction indicated by arrow F of fig. 1.

The enclosure 20 of the rotating storage equipment can be accommodated in a chamber, annular too, which insulates it from the surrounding environment with the possibility to deliver and/or load and/or unload from the internal environment to the external environment through preset openings.

In such manner, inside the storage equipment thus insulated, the product can be subjected to treatments and/or processes which exploit the rotation time of the enclosure between a loading station and an unloading one for the performance of such tasks.

A further preferred application of the rotating storage equipment is provided for in the cement roofing tile production process in which the enclosure, specifically made to hold the wet coloured cement roofing tiles allows subjecting the product to a quicker seasoning process due to the heat treatment which exploits the movement of the stored product in the cyclical rotation motion between the entrance and the exit.

Regarding this, it should be observed that the racks are provided with rods 26 having horizontal brackets 27 arranged radially, in such a manner that each of them connects, for example, a rod 26 internal with respect to the platform to a rod external to it, to allow placing the roofing tiles along the two sides.

The rotating storage equipment according to the invention can be used in a drying process for paintings and/or paints applied on a product, such as for example acrylic paints and/or paints for surface finishing of the coloured cement roofing tiles.

Furthermore, the rotating storage equipment can be used for quick seasoning of products made of vibrated and/or pressed and/or extruded concrete adapting their dimensions and/or structure to the dimensions of the specific product which is generally made on a support plate.

The rotating storage equipment according to the present invention has the further advantage of allowing the introduction of the product into it within a very short period of time from the moment of production of the product itself.

For example, it can be used for the production of hot concrete mixture, preheated at 40-50°C, without excessive heat loss before introducing the product into the enclosure hence advantageously leading to reduction of the normal time required for the quick seasoning by about 50%.

The loading 30 and unloading 31 stations are made substantially identical to each other and they are provided with translatable and liftable arms 32 whose width is smaller with respect to the gap provided between the support means, and bearing a transport system such as a conveyor belt 34.

Such stations 30, 31 are thus provided to be fitted between the two rods of a rack and respectively for depositing or drawing the product 12.

The description clearly outlines the characteristics of the rotating storage equipment subject of the present industrial invention. Furthermore, it is clear that such storage equipment represents a simple and versatile organised system useable as an industrial equipment where products can be placed with the aim of subjecting them to any technological treatment or process over the period of time the product remains within the storage equipment itself.

## Claims

1. Rotating storage equipment (10) comprising a circular ring enclosure (20) provided with a plurality of levels each comprising support means (21) for elements or products (12) to be stored comprising a plurality of adjacent radial racks provided on which are levels or support surfaces, according to the desired number and dimensions adapted to accommodate the elements or products (12) to be stored, a loading station (30) and an unloading station (31) of the abovementioned elements (12) at fixed and predetermined stations, and movement means (40) which rotate the enclosure (20) to position it in proximity to the abovementioned stations (30, 31), **characterised in that** said enclosure (20) comprises a circular ring platform (22) of suitable dimensions which is made up of sheet panels suitably shaped and connectable to each other in such a manner to obtain the desired ring shape of a predetermined diameter, wherein said platform (22) bears rising from it said support means (21), and wherein said racks are fixed against the circular ring platform (22) and provide on the upper part at the last level for a series of connections (28), circular ring-shaped too, which ensure flexural and torsional rigidity of the assembly.

2. Rotating storage equipment (10) according to claim 1, wherein said platform (22) is supported by a plurality of radial beams (23) through interposition of idler wheels, of dimensions and characteristics suitable to bear the loads placed on them.

3. Rotating storage equipment (10) according to claim 2, wherein said radial beams (23) can be positioned and adjusted in such a manner that all the idler wheels are tangential to the same plane and arranged in such a manner to rotate tangentially.

4. Rotating storage equipment (10) according to claim 1, wherein said movement means (40) of the rotating enclosure are made through a constant pitch indexing system operated by a hydraulic oil cylinder (41) at a variable speed, in such a manner to provide an acceleration and/or deceleration ramp according to a preset cycle to pass from a loading/unloading position to another and different position.

5. Rotating storage equipment (10) according to claim 1, wherein said movement means (40) of the rotating enclosure provide for a continuous drive at a constant and/or variable speed according to predeterminable programmes.

6. Rotating storage equipment (10) according to claim 1, wherein said enclosure (20) of the rotating enclosure can be accommodated in a chamber, annular too, which insulates it from the surrounding environment with the possibility to deliver and/or load and/or unload the product from the internal environment to the external environment through preset openings.

7. Rotating storage equipment (10) according to claim 1, wherein said racks are provided with rods (26) bearing horizontal brackets (27).

8. Rotating storage equipment (10) according to claim 1, wherein said loading (30) and unloading (31) stations are made substantially identical to each other and they are provided with translatable and liftable arms (32) whose width is smaller with respect to the gap provided between the support means (21), and bearing a transport system such as a conveyor belt (34).

9. Rotating storage equipment (10) according to claim 1, wherein said storage equipment is designed to perform the process of production of cement roofing tiles wherein the enclosure, specifically made to hold the wet coloured cement roofing tiles allows subjecting the product to a quicker seasoning process due to the heat treatment which exploits the movement of the stored product in the cyclical rotation motion between the entrance and the exit.

10. Rotating storage equipment (10) according to claim 1, wherein said storage equipment is designed to be used in a drying process for paintings and/or paints applied on a product, such as for example acrylic paints and/or paints for surface finishing of the coloured cement roofing tiles.

11. Rotating storage equipment (10) according to claim 1, wherein said rotating storage equipment is designed to be used for quick seasoning of products made of vibrated and/or pressed and/or extruded concrete adapting their dimensions and/or structure to the dimensions of the specific product which is generally made on a support plate.

## Patentansprüche

1. Rotationsspeichervorrichtung (10), umfassend ein kreisrundes Ringgehäuse (20), das mit einer Vielzahl von Ebenen versehen ist, die jeweils Tragmittel (21) für zu speichernde Elemente oder Erzeugnisse (12) umfassen, die eine Vielzahl von benachbarten radialen Gestellen umfassen, auf denen entsprechend der gewünschten Anzahl und den zum Aufnehmen der zu speichernden Elemente oder Erzeugnisse (12) geeigneten Abmessungen Ebenen oder Auflageflächen vorgesehen sind, eine Beladestation (30) und eine Entladestation (31) für die oben genannten Elemente (12) bei ortsfesten und vorbestimmten Stationen und Bewegungsmittel (40), die das Gehäuse (20) drehen, um es in der Nähe der oben genannten Stationen (30, 31) zu positionieren, **dadurch gekennzeichnet, dass** dieses Gehäuse (20) eine kreisrunde Ringplattform (22) mit geeigneten Abmessungen umfasst, die aus Blechplatten besteht, die passend geformt und miteinander verbunden werden können, um die gewünschte Ringform mit einem vorbestimmten Durchmesser zu erhalten, wobei diese Plattform (22) von ihr aufsteigend die Tragmittel (21) trägt und wobei diese Gestelle an der kreisrunden Ringplattform (22) befestigt sind und auf dem oberen Teil bei der letzten Ebene eine Reihe von ebenfalls kreisrunden ringförmigen Verbindungen (28) vorsehen, welche die Biege- und Torsionssteifigkeit der Anordnung gewährleisten.

2. Rotationsspeichervorrichtung (10) nach Anspruch 1, bei der die Plattform (22) von einer Vielzahl von radialen Trägern (23) durch Einfügung von Losrädern getragen wird, deren Abmessungen und Eigenschaften zum Tragen der auf ihnen angeordneten Lasten geeignet sind.

3. Rotationsspeichervorrichtung (10) nach Anspruch 2, bei der die radialen Träger (23) so positioniert und eingestellt werden können, dass alle Losräder tangential zur selben Ebene und so angeordnet sind, dass sie tangential drehen.

4. Rotationsspeichervorrichtung (10) nach Anspruch 1, bei der die Bewegungsmittel (40) des Rotationsgehäuses aus einem Schaltsystem mit konstanter Teilung bestehen, das derart von einem ölhydraulischen Zylinder (41) mit einer variablen Geschwindigkeit betrieben wird, dass entsprechend einem voreingestellten Zyklus eine Beschleunigungs- und/oder Verlangsamungsrampe bereitgestellt wird, um von einer Belade-/Entladeposition zu einer anderen und verschiedenen Position überzugehen.

5. Rotationsspeichervorrichtung (10) nach Anspruch 1, bei der die Bewegungsmittel (40) des Rotationsgehäuses einen kontinuierlichen Antrieb mit einer konstanten und/oder variablen Geschwindigkeit gemäß vorbestimmbaren Programmen vorsehen.

6. Rotationsspeichervorrichtung (10) nach Anspruch 1, bei der das Gehäuse (20) des Rotationsgehäuses in einer ebenfalls ringförmigen Kammer untergebracht sein kann, die es von der umliegenden Umgebung isoliert, wobei die Möglichkeit besteht, das Erzeugnis durch vorgegebene Öffnungen zuzustellen und/oder zu laden und/oder aus der inneren Umgebung in die äußere Umgebung zu entladen.

7. Rotationsspeichervorrichtung (10) nach Anspruch 1, bei der die Gestelle mit Stangen (26) versehen sind, die waagrechte Winkelstücke (27) tragen.

8. Rotationsspeichervorrichtung (10) nach Anspruch 1, bei der die Beladestationen (30) und Entladestationen (31) im Wesentlichen identisch zueinander ausgeführt und mit verschiebbaren und anhebbaren Armen (32) versehen sind, deren Breite kleiner als der zwischen den Tragmitteln (21) vorgesehene Zwischenraum ist und die ein Fördersystem wie beispielsweise ein Förderband (34) tragen.

9. Rotationsspeichervorrichtung (10) nach Anspruch 1, wobei diese Speichervorrichtung dazu gestaltet ist, den Prozess der Herstellung von Zementdachsteinen auszuführen, wobei es das Gehäuse, das speziell zum Fassen von nassen farbigen Zementdachsteinen ausgeführt ist, ermöglicht, das Erzeugnis dank der Wärmebehandlung, welche die Bewegung des gespeicherten Erzeugnisses bei der zyklischen Drehbewegung zwischen dem Eingang und dem Ausgang nutzt, einem schnelleren Trocknungsprozess zu unterziehen.

10. Rotationsspeichervorrichtung (10) nach Anspruch 1, wobei diese Speichervorrichtung dazu gestaltet ist, in einem Trocknungsprozess für auf ein Erzeugnis aufgebrachte Malereien und/oder Anstriche wie beispielsweise Acrylanstriche und/oder Anstriche für die Oberflächenbehandlung der farbigen Zementdachsteine verwendet zu werden.

11. Rotationsspeichervorrichtung (10) nach Anspruch 1, wobei diese Rotationsspeichervorrichtung dazu gestaltet ist, zur Schnelltrocknung von Erzeugnissen verwendet zu werden, die aus Rüttelbeton und/oder Pressbeton und/oder extrudiertem Beton bestehen, indem ihre Abmessungen und/oder ihr Aufbau an die Abmessungen des spezifischen Erzeugnisses angepasst werden, das im Allgemeinen auf einer Tragplatte hergestellt wird.

## Revendications

1. Equipement de stockage rotatif (10) comprenant une enceinte annulaire circulaire (20) pourvue d'une pluralité de niveaux comprenant chacun des moyens de support (21) pour des éléments ou produits (12) à stocker comprenant une pluralité de supports radiaux adjacents sur lesquels sont prédisposés des niveaux ou surfaces de support, en fonction du nombre désiré et des dimensions adaptées pour recevoir les éléments ou produits (12) à stocker, une station de chargement (30) et une station de déchargement (31) des éléments précités (12) au niveau de stations fixes et prédéterminées, et des moyens de mouvement (40) qui font tourner l'enceinte (20) pour la positionner à proximité des stations précitées (30, 31), **caractérisé en ce que** ladite enceinte (20) comprend une plateforme annulaire circulaire (22) de dimensions appropriées qui est constituée de panneaux de tôle profilés de manière appropriée et pouvant être connectés entre eux de manière à obtenir la forme annulaire désirée d'un diamètre prédéterminé, dans lequel ladite plateforme (22) supporte en montant à partir de celle-ci lesdits moyens de support (21), et dans lequel lesdits supports sont fixés contre la plateforme annulaire circulaire (22) et fournissent sur la partie supérieure au dernier niveau une série de connexions (28), également de forme annulaire circulaire, qui garantissent une rigidité en flexion et en torsion de l'ensemble.

2. Equipement de stockage rotatif (10) selon la revendication 1, dans lequel ladite plateforme (22) est supportée par une pluralité de poutres radiales (23) par le biais de l'interposition de roues libres, de dimensions et caractéristiques adaptées pour supporter les charges placées sur celles-ci.

3. Equipement de stockage rotatif (10) selon la revendication 2, dans lequel lesdites poutres radiales (23) peuvent être positionnées et ajustées de manière que toutes les roues libres soient tangentielles au même plan et agencées de manière à tourner tangentiellement.

4. Equipement de stockage rotatif (10) selon la revendication 1, dans lequel lesdits moyens de mouvement (40) de l'enceinte tournante sont réalisés par le biais d'un système d'indexage de pas constant actionné par un cylindre à huile hydraulique (41) à vitesse variable, de manière à fournir une rampe d'accélération et/ou de décélération en fonction d'un cycle prédéterminé pour passer d'une position de chargement/déchargement à une autre et différente position.

5. Equipement de stockage rotatif (10) selon la revendication 1, dans lequel lesdits moyens de mouvement (40) de l'enceinte tournante fournissent un entraînement continu à une vitesse constante et/ou variable en fonction de programmes prédéterminés.

6. Equipement de stockage rotatif (10) selon la revendication 1, dans lequel ladite enceinte (20) de l'enceinte tournante peut être logée dans une chambre, également annulaire, qui l'isole du milieu environnant avec la possibilité de distribuer et/ou charger et/ou décharger le produit du milieu interne au milieu externe à travers des ouvertures préétablies.

7. Equipement de stockage rotatif (10) selon la revendication 1, dans lequel lesdits supports sont munis de tiges (26) portant des supports horizontaux (27).

8. Equipement de stockage rotatif (10) selon la revendication 1, dans lequel lesdites stations de chargement (30) et de déchargement (31) sont réalisées sensiblement identiques entre elles et en ce qu'elles sont équipées de bras déplaçables par translation et soulèvement (32) dont la largeur est inférieure par rapport à l'intervalle présent entre les moyens de support (21), et supportant un système de transport tel qu'un convoyeur à bande (34).

9. Equipement de stockage rotatif (10) selon la revendication 1, dans lequel ledit équipement de stockage est conçu pour exécuter le processus de production de tuiles de couverture en ciment dans lequel l'enceinte, réalisée spécifiquement pour maintenir les tuiles de couverture en ciment colorées humides, permet de soumettre le produit à un processus de séchage plus rapide en raison du traitement thermique qui exploite le déplacement du produit stocké dans le mouvement de rotation cyclique entre l'entrée et la sortie.

10. Equipement de stockage rotatif (10) selon la revendication 1, dans lequel ledit équipement de stockage est conçu pour être utilisé dans un processus de séchage pour des laques et/ou des peintures appliquées sur un produit, comme par exemple des peintures acryliques et/ou des peintures pour la finition de surface de tuiles de couverture en ciment colorées.

11. Equipement de stockage rotatif (10) selon la revendication 1, dans lequel ledit équipement de stockage rotatif est conçu pour être utilisé pour le séchage rapide de produits réalisés en béton vibré et/ou pressé et/ou extrudé en adaptant leurs dimensions et/ou leur structure aux dimensions du produit spécifique qui est généralement réalisé sur une plaque de support.
